# EUROPÄISCHE PATENTSCHRIFT

(11) **EP 4 326 523 B1**
(45) Veröffentlichungstag und Bekanntmachung des Hinweises auf die Patenterteilung: **26.11.2025**
(21) Anmeldenummer: 22724690.7
(22) Anmeldetag: 21.04.2022
(51) Int. Cl.: B29C 49/42, B29C 49/06

(54) **ZULAUFVORRICHTUNG**
SUPPLY DEVICE
DISPOSITIF D'ALIMENTATION

(30) Priorität: 23.04.2021 CH 4402021
(43) Veröffentlichungstag der Anmeldung: 28.02.2024
(73) Patentinhaber: M. Tanner AG, 8406 Winterthur (CH)
(72) Erfinder: TANNER, Marcel, 8303 Bassersdorf (CH)
(74) Vertreter: Schaad, Balass, Menzl & Partner AG
(86) Internationale Anmeldenummer: PCT/EP2022/060624
(87) Internationale Veröffentlichungsnummer: WO 2022/223734

(56) Entgegenhaltungen:
- EP-A1- 0 452 857
- EP-B1- 3 564 006
- US-A1- 2005 048 159
- US-A1- 2006 269 648

## Beschreibung

### Gebiet der Erfindung

Die vorliegende Erfindung betrifft eine Zulaufvorrichtung für eine Förderanlage für Vorformlinge.

### Hintergrund der Erfindung

Eine Zulaufvorrichtung zum Zuführen von Vorformlingen aus thermoplastischem Kunststoff mit einem Tragring im Bereich des offenen Endes zu einer Blasmaschine zum Herstellen von insbesondere PET-Kunststoffflaschen wird beispielsweise in der DE 203 08 513 U1 beschrieben. Die Vorrichtung weist einen bodennah aufgestellten Silo zur ungeordneten Aufnahme einer Vielzahl von Vorformlingen auf, der von oben her durch Einschütten der in Kästen angelieferten Vorformlinge periodisch befüllt wird. Nahe dem Silo ist bodennah ein Rollensortierer mit zwei gegenläufig angetriebenen, zylindrischen Rollen aufgestellt, der in Transportrichtung leicht nach unten geneigt ist. Durch einen Schrägförderer werden die Vorformlinge am Boden des Silos ungeordnet entnommen und am oberen Ende des Rollensortierers eingefüllt. Das obere Ende des Rollensortierers befindet sich ca. 1 Meter über dem Boden, das untere Ende entsprechend tiefer. Dem Einlaufstern des Linearofens ist eine schräge Rutsche unmittelbar vorgeschaltet, die zwei mit Abstand angeordnete Tragschienen umfasst. Die Vorformlinge liegen mit ihren Tragringen auf den Tragschienen auf und können, angetrieben durch den Hangabtrieb, zwischen diesen in Richtung Einlaufstern rutschen. Die Rutsche hat eine gewisse Pufferfunktion zwecks Sicherung einer lückenlosen Beschickung der Streckblasmaschine und nimmt daher weit über 100 Vorformlinge auf. Dementsprechend liegt ihr oberes Ende mehr als 3 Meter über dem Boden. Zur Überwindung des Höhenunterschieds von ca. 2 Metern oder mehr zwischen dem Auslauf des Rollensortierers, der die am oberen Ende ungeordnet zugeführten Vorformlinge zwischen seinen beiden Rollen in herkömmlicher Weise in eine Einzelreihe formiert und mit dem offenen Ende nach oben ausrichtet, und dem oberen einlaufseitigen Ende der Rutsche ist ein Höhenförderer zwischengeschaltet.

Eine weitere Zulaufvorrichtung für Vorformlinge wird beispielsweise in der EP 3 453 648 A1 beschrieben. Die Zulaufvorrichtung weist zwei gegenüberliegend angeordnete Transportschienen auf, auf welchen die Vorformlinge während des Transports mit ihrem Tragring aufliegen. Weiter weist die darin gezeigte Zulaufvorrichtung sechs paarweise gegenüberliegende Riementransporteinheiten auf, welche derart über den Transportschienen angeordnet sind, dass die Riemen der Riementransporteinheiten mit dem Gewindeabschnitt der Vorformlinge in Eingriff kommen und diese zwischen den Riemen mit einer Andrückkraft klemmen. Die erforderliche Andrückkraft wird vorzugsweise durch Federvorspannung von mehreren Riementransportrollen, über welche die Riemen der Riementransporteinheiten laufen, erreicht. Die Antriebe der Riementransporteinheiten, welche bevorzugt als Servomotoren ausgebildet sind, bringen ein Drehmoment auf die in der Zulaufvorrichtung gestauten Vorformlinge auf, welches erhalten bleibt, ohne dass die Riemen durchschleifen.

EP 3 564 006 B1, US 2006/269648 A1, US 2005/048159 A1 und EP 0 452 857 A1 offenbarten grundsätzlich eine Zulaufvorrichtung für eine Förderanlage für Vorformlinge, welche ausgebildet ist, geordnet von einem stromaufwärtigen Modul der Förderanlage kommende Vorformlinge zu einem stromabwärtigen Modul der Förderanlage zu fördern, wobei die Zulaufvorrichtung einen ersten und einen zweiten über jeweils mindestens zwei Rollen geführte Förderriemen umfasst, wobei zwischen einem ersten Riemenabschnitt des ersten Förderriemens und einem zweiten Riemenabschnitt des zweiten Förderriemens eine Förderstrecke für die Vorformlinge ausgebildet wird, wobei der erste und der zweite Förderriemen derart angeordnet sind, dass eine seitliche Kantenfläche des ersten Förderriemens und eine seitliche Kantenfläche des zweiten Förderriemens eine Auflage für einen Tragring eines Vorformlings ausbilden, wobei die Auflage derart mit der Unterseite des Tragrings in Eingriff bringbar ist, dass eine Staukraft auf den sich in der Förderstrecke befindenden Vorformling in Förderrichtung aufgebracht wird.

### Darstellung der Erfindung

Bei den Zulaufvorrichtungen für Vorformlinge ist es typischerweise erwünscht, den Aufbau zu vereinfachen, wobei z.B. eine Verringerung der Anzahl Bauteile und ein Aufbau in Bodennähe mit einer geringen Neigung der Förderstrecke bevorzugt ist. Gleichzeitig ist es erwünscht, eine ausreichende Hygiene sicherzustellen, da die aus den Vorformlingen geblasenen Behälter üblicherweise mit zur Konsumation bestimmten Getränken befüllt werden.

Es ist daher eine Aufgabe der vorliegenden Erfindung, eine Zulaufvorrichtung für eine Förderanlage für Vorformlinge sowie eine Förderanlage mit einer solchen Zulaufvorrichtung bereitzustellen, welche den Stand der Technik mindestens teilweise verbessert.

Diese Aufgabe wird mit einer Zulaufvorrichtung mit den Merkmalen des unabhängigen Anspruchs 1 gelöst. Vorteilhafte Ausgestaltungen der Erfindung sind in den abhängigen Ansprüchen und in der vorliegenden Beschreibung sowie den Figuren gegeben.

Die vorliegende Offenbarung betrifft eine Zulaufvorrichtung für eine Förderanlage für Vorformlinge, welche ausgebildet ist, geordnet von einem stromaufwärtigen Modul der Förderanlage kommende Vorformlinge zu einem stromabwärtigen Modul der Förderanlage zu fördern, wobei die Zulaufvorrichtung einen ersten und einen zweiten über jeweils mindestens zwei Rollen geführte Förderriemen umfasst, wobei zwischen einem ersten Riemenabschnitt des ersten Förderriemens und einem zweiten Riemenabschnitt des zweiten Förderriemens eine Förderstrecke für die Vorformlinge ausgebildet wird, wobei der erste und der zweite Förderriemen derart angeordnet sind, dass eine seitliche Kantenfläche des ersten Förderriemens und eine seitliche Kantenfläche des zweiten Förderriemens eine Auflage für einen Tragring eines Vorformlings ausbilden, wobei die Auflage derart mit der Unterseite des Tragrings in Eingriff bringbar ist, dass eine Staukraft auf den sich in der Förderstrecke befindenden Vorformling in Förderrichtung aufgebracht wird.

Die Vorformlinge sind bevorzugt aus Polyethylenterephthalat geformt und weisen in der Regel im Bereich ihrer Öffnung einen äusseren Gewindeabschnitt auf, an welchen sich ein nach aussen abstehender Tragring anschliesst, wobei sich unterhalb des Tragrings typischerweise ein länglicher, im Wesentlichen zylindrischer Abschnitt mit einem abgerundeten, geschlossenen Ende anschliesst. Der längliche Abschnitt kann in bestimmten Vorformlingen einen konischen Teilabschnitt aufweisen, welcher sich unterhalb des Tragrings anschliesst. Im Zusammenhang mit der vorliegenden Erfindung wird zudem unter geordnet geförderte Vorformlinge aufrecht, mit der Öffnung nach oben ausgerichtet und in einer Reihe geförderte Vorformlinge verstanden.

Die Zulaufvorrichtung bietet den Vorteil, dass durch die Förderriemen sowohl eine Auflage für den Tragring des Vorformlings zur Förderung der Vorformlinge in Förderrichtung entlang der Förderstrecke als auch ein Aufbringen einer Staukraft bzw. eines Staudrucks auf in der Förderstrecke gestaute Vorformlinge bereitgestellt werden kann. Insbesondere kann auf eine Transportschiene für die Tragringe bzw. Vorformlinge verzichtet werden, was den Aufbau der Zulaufvorrichtung vereinfacht. Da die Förderung der Vorformlinge zudem nicht auf einem Gleiten auf Transportschienen beruht, besteht keine Notwendigkeit, die Förderstrecke mit einem erheblichen Gefälle in Förderrichtung zu versehen. Weiter wird durch die Zulaufvorrichtung die Hygiene verbessert, da der Gewindeabschnitt des in der Zulaufvorrichtung geförderten Vorformlings während der Förderung frei bleibt, d.h. nicht kontaktiert wird. Zudem ist es im Vergleich zu Vorrichtungen, bei welchen der Vorformling am Gewindeabschnitt geklemmt wird, nicht erforderlich, eine Andrückkraft für die Klemmung zu erzeugen.

Vorteilhafterweise wird mit der durch die Zulaufvorrichtung definierte Förderstrecke eine Pufferstrecke bereitgestellt, in welcher die Vorformlinge gestaut werden können und welche mit diesen aufgefüllt werden kann. Durch die Stauung von Vorformlingen in der Zulaufvorrichtung kann eine effiziente und sichere Übergabe der Vorformlinge an eine nachgeordnete Abnahmevorrichtung, insbesondere Vereinzelungsvorrichtung, stattfinden.

In einer Ausgestaltung der Zulaufvorrichtung bilden jeweils eine zur Kantenfläche senkrecht orientierte Oberfläche des ersten und zweiten Förderriemens zwei gegenüberliegende Stabilisierungsflächen für den unterhalb des Tragrings anschliessenden Abschnitt des Vorformlings, welche derart mit dem unterhalb des Tragrings anschliessenden Abschnitt des Vorformlings in Eingriff bringbar sind, dass eine Auslenkung des sich in der Förderstrecke befindenden Vorformlings quer zur Förderrichtung begrenzt wird und optional das Fördern des Vorformlings unterstützt wird.

Durch die Stabilisierungsflächen der Förderriemen kann eine Begrenzung der Auslenkung der Vorformlinge quer zur Förderrichtung erreicht werden. Dies ist insbesondere für die Stauung von Vorformlingen vorteilhaft, da Vorformlinge bei einer Stauung dazu tendieren, quer zur Förderrichtung ausgelenkt zu werden. Durch die Begrenzung der Querauslenkung der Vorformlinge kann daher eine Stabilisierung der Vorformlinge und eine Verbesserung der geordneten Förderung der Vorformlinge in der Zulaufvorrichtung erreicht werden. Für die Stabilisierung der Vorformlinge reicht es dabei vorteilhafterweise aus, wenn die Stabilisierungsflächen den länglichen Abschnitt unterhalb des Tragrings bei zu grosser Querauslenkung kontaktieren. Ein klemmender Eingriff ist daher für Stabilisierungszwecke in der Regel nicht erforderlich.

Weiter kann der Transport der Vorformlinge durch Kontakt mit den Oberflächen der Förderriemen, welche die Stabilisierungsflächen ausbilden, unterstützt werden. In bestimmten Ausgestaltungen können die Stabilisierungsflächen als Mitnehmerflächen wirken und dabei zusätzlich zu den eine Auflage ausbildenden Kantenflächen eine Staukraft bzw. Staudruck auf die Vorformlinge erzeugen.

Mit den Förderriemen der Zulaufvorrichtung kann daher vorteilhafterweise mindestens eine Vierfachfunktion erreicht werden, welche die Bereitstellung einer Auflage für den Tragring, die Förderung der Vorformlinge in der durch die Förderriemen bzw. den ersten und zweiten Riemenabschnitten definierte Förderstrecke, die Erzeugung einer Staukraft bzw. Staudrucks auf die Vorformlinge sowie die Stabilisierung der Vorformlinge in der Förderstrecke umfasst.

In einer Ausgestaltung weist die Zulaufvorrichtung für jeden Förderriemen einen Antrieb auf.

Alternativ weist die Zulaufvorrichtung einen gemeinsamen Antrieb für den ersten und den zweiten Förderriemen auf, welcher vorzugsweise eingerichtet ist, ein Drehmoment zwischen 10 Nm und 12 Nm zu erzeugen.

Mit einem gemeinsamen Antrieb für beide Förderriemen kann der Aufbau der Zulaufvorrichtung weiter vereinfacht werden. Durch ein Wendegetriebe können mit dem gemeinsamen Antrieb die gegensätzlichen Drehrichtungen des ersten und des zweiten Förderriemens erzeugt werden. Vorzugsweise ist weiter ein Getriebe mit einer 10:1 Untersetzung vorgesehen, welche am Abtrieb ein Drehmoment zwischen 10 Nm und 12 Nm erzeugt, wobei dadurch für jeden Förderriemen ein Drehmoment zwischen 5 Nm und 6 Nm bereitgestellt werden kann. Für den Antrieb kann dabei z.B. ein Motor mit einer Drehzahl von 1000 U/min eingesetzt werden, so dass für die Förderriemen eine Drehzahl von 100 U/min erzeugt werden kann.

In einer Ausgestaltung sind die Förderriemen aus einem Kunststoff hergestellt.

Die Förderriemen können beispielsweise aus einem Polyurethan oder einem Polyester oder einem Polyamid hergestellt sein.

Der Kunststoff stellt vorteilhafterweise eine geeignete Reibkraft zwischen Förderriemen und Vorformling, insbesondere zwischen der Auflage und dem Tragring, bereit, so dass ein Fördern des Vorformlings und ein Erzeugen von Staukraft bzw. Staudruck ermöglicht wird, wobei wie weiter unten beschrieben, gleichzeitig ein geeigneter Gleitschlupf bereitgestellt wird.

In einer Ausgestaltung sind die Förderriemen als Zahnriemen ausgebildet, wobei die Auflage für einen Tragring eines Vorformlings mindestens teilweise durch Seitenkanten der Zähne der Zahnriemen ausgebildet wird.

Da sich die Zähne der Zahnriemen senkrecht zur als Stabilisierungsfläche dienenden Oberfläche der Förderriemen erstrecken, können die Zähne zusätzlich zur Eingriffsfunktion in ein Antriebszahnrad durch die Seitenkanten der Auflage für den Tragring eines Vorformlings dienen.

In einer Ausgestaltung sind die als Auflage für einen Tragring eines Vorformlings ausgebildeten Kantenflächen der Förderriemen derart ausgebildet, dass bei Überschreiten einer Grenzstaukraft auf einen sich in der Förderstrecke befindenden Vorformlings ein Gleitschlupf zwischen den Kantenflächen und dem Tragring des Vorformlings auftritt.

Durch den Gleitschlupf wird es den Förderriemen der Zulaufvorrichtung ermöglicht, bei sich stauenden Vorformlingen unter den Tragringen dieser Vorformlinge durchzurutschen und dabei weitere Vorformlinge nachkommen und zusätzlich zu den sich bereits stauenden Vorformlingen aufschliessen und aufstauen zu lassen. Die Förderriemen der Zulaufvorrichtung können daher bei Stauung von Vorformlingen ohne Unterbrechung weiterlaufen und die Förderstrecke in der Zulaufvorrichtung kontinuierlich auffüllen. Da der Gleitschlupf erst bei Überschreiten einer Grenzstaukraft auftritt, kann aber gleichzeitig sichergestellt werden, dass eine kontinuierliche Staukraft bzw. Staudruck auf die gestauten Vorformlinge ausgeübt wird. Durch das Bereitstellen eines Gleitschlupfs kann zudem sichergestellt werden, dass die Staukraft bzw. der Staudruck nicht zu hoch wird.

Um den Gleitschlupf zu ermöglichen, ist es vorteilhaft, die Förderriemen aus einem geeigneten Kunststoff herzustellen. Weiter ist es für die Bereitstellung von Gleitschlupf vorteilhaft, dass die Förderriemen den Vorformling wie bereits beschrieben nicht klemmen müssen.

Der Gleitschlupf kann in bestimmten Ausgestaltungen entsprechend auch zwischen den als Stabilisierungsflächen ausgebildeten Oberflächen und dem unter dem Tragring anschliessenden Abschnitt des Vorformlings auftreten.

Vorzugsweise sind die Stabilisierungsflächen der Förderriemen vertikal ausgerichtet.

Alternativ können die Stabilisierungsflächen der Förderriemen eine Neigung zwischen 5° und 10° gegenüber der Vertikalen aufweisen.

In einer Ausgestaltung weisen die Förderriemen jeweils eine Stabilisierungsfläche auf, welche derart ausgebildet sind, dass sich der Abstand zwischen den Förderriemen in der Förderstrecke vorzugsweise in von der Auflage abgewandter Richtung vergrössert.

Durch die Vergrösserung des Abstandes zwischen den Stabilisierungsflächen kann vorteilhafterweise eine Stabilisierung für Vorformlinge erreicht werden, bei welchen der unterhalb des Tragrings angeordnete längliche Abschnitt ein von einem geraden Zylinder abweichendes Profil aufweist. Zum Beispiel kann eine vorteilhafte Stabilisierung für ein Vorformling mit einem nach Aussen gewölbten Abschnitt oder einem sich konisch erweiternden Abschnitt erreicht werden.

In einer Ausgestaltung weisen die Stabilisierungsflächen jeweils eine Abstufung auf, welche die Stabilisierungsflächen jeweils in einer erste und eine zweite Stabilisierungsteilfläche unterteilt.

Die Abstufungen der Stabilisierungsflächen der Förderriemen können jeweils als Hinterschneidung ausgebildet sein. Durch die Abstufung der Stabilisierungsflächen vergrössert sich der Abstand zwischen den Förderriemen vorzugsweise stufenartig. Insbesondere kann jede Stabilisierungsfläche durch die Abstufung eine erste und eine zweite Stabilisierungsteilfläche aufweisen, welche vertikal ausgerichtet sein können, wobei die erste Stabilisierungsteilfläche vorzugsweise an der die Auflage ausbildende seitliche Kantenfläche anschliesst und die zweite Stabilisierungsteilfläche unterhalb der ersten Stabilisierungsteilfläche angeordnet ist. Die ersten Stabilisierungsteilflächen des ersten und des zweiten Förderriemens können einen ersten Abstand zwischen den Förderriemen und die zweiten Stabilisierungsteilflächen des ersten und des zweiten Förderriemens einen zweiten Abstand zwischen den Förderriemen definieren, wobei der zweite Abstand vorzugsweise grösser als der erste Abstand ist. Die Abstufung kann eine die erste und die zweite Stabilisierungsteilfläche verbindende Schräge oder horizontale Teilfläche umfassen.

In einer Ausgestaltung sind die Förderriemen derart angeordnet, dass die Förderstrecke horizontal ist. Alternativ können die Förderriemen derart angeordnet sein, dass die Förderstrecke in Förderrichtung geneigt ist. Die Förderstrecke kann z.B. ein Gefälle zwischen 1° und 20°, bevorzugt zwischen 5° und 10°, gegenüber der Horizontalen aufweisen.

In einer Ausgestaltung weisen die Förderriemen eine Breite auf, so dass die Stabilisierungsflächen mindestens ein Zwanzigstel, bevorzugt mindestens ein Zehntel, besonders bevorzugt mindestens ein Fünftel, weiter besonders bevorzugt mindestens ein Viertel, der Höhe des sich in der Förderstrecke befindenden Vorformlings abdecken.

Durch die Wahl einer geeigneten Breite der Förderriemen kann die Stabilisierungsfunktion in gewünschter Weise abgestimmt werden.

In einer Ausgestaltung weisen die Förderriemen eine Breite zwischen 10 und 50 mm auf.

Entsprechend Anspruch 1 ist am stromabwärtigen Abschnitt der Förderstrecke der Zulaufvorrichtung ein Minimum-Sensor zur Detektion von Vorformlingen und am stromaufwärtigen Abschnitt der Förderstrecke der Zulaufvorrichtung ein Maximum-Sensor zur Detektion von Vorformlingen angeordnet.

Der Minimum-Sensor kann die An- und Abwesenheit von Vorformlingen detektieren und ist vorzugsweise mit einer Steuerung verbunden. Wenn der Minimum-Sensor keine Vorformlinge mehr in seinem Bereich detektiert, ist der minimale Füllstand unterschritten worden und es kann z.B. ein Alarm-Signal ausgelöst werden, damit mögliche Störungen in vorgeschalteten Einheiten beseitigt werden können. Gleichzeitig kann das stromabwärtige Modul, wie z.B. eine Blasmaschine oder ein Einlaufstern eines Klemmförderers oder ein Inspektionssystem gestoppt, d.h. die Produktion unterbrochen werden.

Wenn der Maximum-Sensor keine Vorformlinge in seinem Bereich detektiert, kann die Förderung von Vorformlingen im stromaufwärtigen Modul, z.B. in einem Rollensortierer, beschleunigt werden, um die Förderstrecke in der Zulaufvorrichtung wieder aufzufüllen.

Nach Behebung der Fehlerquelle, welche zum Unterschreiten des minimalen Füllstandes geführt hat, wird die Produktion vorzugsweise erst wieder angefahren, wenn die Förderstrecke in der Zulaufvorrichtung wieder mit Vorformlingen aufgefüllt ist, so dass der Maximum-Sensor keine Lücken detektiert. Vorzugsweise sind der Minimum-Sensor und der Maximum-Sensor als Lichtschranken ausgebildet.

Entsprechend Anspruch 1 ist zwischen dem Minimum-Sensor und dem Maximum-Sensor mindestens ein Lückenerkennungssensor, bevorzugt mindestens zwei, besonders bevorzugt vier oder mehr, Lückenerkennungssensoren angeordnet ist bzw. sind, welcher bzw. welche eingerichtet ist bzw. sind, Lücken in der Förderstrecke zwischen Vorformlingen zu detektieren.

Mit der Detektion von Lücken durch die Lückenerkennungssensoren kann ein Aufholmechanismus in Gang gesetzt werden, so dass Vorformlinge schneller nachgefördert werden, um diese Lücken zu schliessen. Vorzugsweise sind die Lückenerkennungssensoren eingerichtet, Lücken zwischen Vorformlingen zu detektieren, welche vergleichbar oder grösser als der Durchmesser eines Vorformlings sind.

Vorzugsweise sind die Lückenerkennungssensoren als Lichtschranken ausgebildet.

Zu diesem Zweck ist bzw. sind der Lückenerkennungssensor oder die Lückenerkennungssensoren vorzugsweise mit einer Steuerung verbunden, welche bei Detektion von einer oder mehreren Lücken den mindestens einen Antrieb derart steuert, dass die Umlaufgeschwindigkeit der Förderriemen erhöht wird.

Dadurch, dass die Umlaufgeschwindigkeit der Förderriemen erhöht wird, können die Lücken durch nachgeförderte Vorformlinge geschlossen werden. Durch den oben beschriebenen Gleitschlupf können die Förderriemen dabei unter den bereits gestauten Vorformlingen durchrutschen und gleichzeitig die Lücken durch Nachfördern von Vorformlingen schliessen, so dass effektiv ein Aufholen einer lückenhaften Förderung ermöglicht wird. Alternativ oder in Ergänzung kann ein der Zulaufvorrichtung vorgeschalteter Aufreihsortierer angesteuert werden, damit durch den Aufreihsortierer Vorformlinge mit einer höheren Geschwindigkeit nachgefördert werden.

In einer Ausgestaltung sind unterhalb Förderriemen jeweils mindestens ein Paar von gegenüberliegend angeordneten Luftdüseneinheiten vorgesehen, welche den Transport der Vorformlinge in Förderrichtung mindestens zeitweise unterstützen.

Die Luftdüseneinheiten weisen vorzugsweise schräggestellte oder kiemenförmige Luftdüsen auf, welche auf den länglichen Abschnitt der Vorformlinge unterhalb des Tragrings mit einem oder mehreren Luftstössen einwirken können. Dies kann z.B. eingesetzt werden, wenn eine oder mehrere Vorformlinge in der Förderstrecke hängenbleiben oder verklemmen und so eine Lücke entsteht. Die Lücke kann wiederum von einem Lückenerkennungssensor detektiert und die entsprechenden Luftdüseneinheiten aktiviert werden.

Die Luftdüseneinheiten können zudem in bestimmten Ausgestaltungen den Übergang der Vorformlinge von der Zulaufvorrichtung zu einer nachgeordneten Abnahmevorrichtung der Förderanlage unterstützen.

In einer Ausgestaltung sind die Förderriemen, die Sensoren und/oder die Luftdüseneinheiten in der Richtung quer zur Förderstrecke mittels einer Breitenverstellvorrichtung verstellbar angeordnet. Auf diese Weise kann die Zulaufvorrichtung auf Vorformlinge mit unterschiedlicher Grösse bzw. unterschiedlichem Durchmesser eingestellt werden.

In einer Ausgestaltung weist die Breitenverstellvorrichtung zumindest zwei gegenüberliegend angeordnete, seitliche Befestigungsprofile auf, welche jeweils an Halterungsstangen montiert sind, welche aufeinander zu und voneinander weg bewegbar sind. Hierdurch kann ein besonders effizienter und genauer Breitenverstellmechanismus bereitgestellt werden.

In einer Ausgestaltung sind an den seitlichen Befestigungsprofilen jeweils die Förderriemen, die Sensoren und/oder die Luftdüseneinheiten befestigt. Die seitlichen Befestigungsprofile weisen vorzugsweise zumindest jeweils zwei seitliche sowie eine obere und eine untere Befestigungsschiene auf. Sie sind daher besonders variabel mit zusätzlichen Bauelementen bestückbar.

In einer Ausgestaltung ist eine Höhenbegrenzung für die Vorformlinge vorgesehen, welche höhenverstellbar, z.B. in einer Führung, gelagert sein kann. Vorzugsweise handelt es sich bei der Höhenbegrenzung um ein C-Profil, welches oberhalb der Öffnung der Vorformlinge angeordnet ist und die Vorformlinge in der Zulaufvorrichtung (sowie vorzugsweise auch beim Übergang in die Zulaufvorrichtung) niederhält.

In einer Ausgestaltung ist die Führung an einem oberen Befestigungsprofil der Zulaufvorrichtung montiert. Die Höhenbegrenzung ist vorzugsweise über ein Höhenverstellelement vertikal bewegbar ist, wobei auch das Höhenverstellelement am oberen Befestigungsprofil montiert ist. Das obere Befestigungsprofil entspricht bevorzugt den seitlichen Befestigungsprofilen. An seinen seitlichen Befestigungsschienen können Kabelkanäle montiert sein. Das Höhenverstellelement ist vorzugsweise in Form einer Hebelanordnung ausgebildet, welche über ein Bedienelement von aussen betätigbar ist.

Die Erfindung betrifft weiter eine Förderanlage für Vorformlinge umfassend eine erfindungsgemässe Zulaufvorrichtung und eine Mehrzahl von Vorformlingen, welche mit veränderlichem Abstand zueinander in der Förderstrecke der Zulaufvorrichtung gefördert werden, wobei auf die Vorformlinge in einem stromabwärtigen Abschnitt der Förderstrecke der Zulaufvorrichtung eine Staukraft bzw. ein Staudruck aufbringbar ist.

In einer Ausgestaltung der Förderanlage ist die Zulaufvorrichtung stromabwärts eines Aufreihsortierers, vorzugsweise eines Rollensortierers oder Zentrifugalsortierers, und stromaufwärts einer Abnahmevorrichtung, vorzugsweise eines Einlaufsterns oder Einlaufrollen, angeordnet.

In einer Ausgestaltung der Förderanlage umfasst die Förderanlage eine Steuerung, welche mit dem Minimum-Sensor und/oder dem Maximum-Sensor und/oder den Lückenerkennungssensoren der Zulaufvorrichtung verbunden ist, und bei Detektion von einer oder mehreren Lücken den mindestens einen Antrieb derart steuert, dass die Umlaufgeschwindigkeit der Förderriemen erhöht wird.

### Liste der Figuren

Exemplarische Ausführungsformen der Erfindung werden anhand der nachfolgenden Figuren und der dazugehörigen Beschreibung näher erläutert. Es zeigen schematisch:
- Figur 1: eine perspektivische Darstellung einer Ausführungsform einer erfindungsgemässen Zulaufvorrichtung;
- Figur 2: eine Frontalansicht eines Ausschnitts der Zulaufvorrichtung aus Figur 1;
- Figur 3: einen Ausschnitt einer perspektivischen Schnittansicht der Zulaufvorrichtung aus Figur 1;
- Figur 4: eine Draufsicht einer Ausführungsform einer Förderanlage;
- Figur 5: eine Schnittansicht eines Ausschnitts einer Ausführungsform einer erfindungsgemässen Zulaufvorrichtung.

### Beschreibung exemplarischer Ausführungsformen

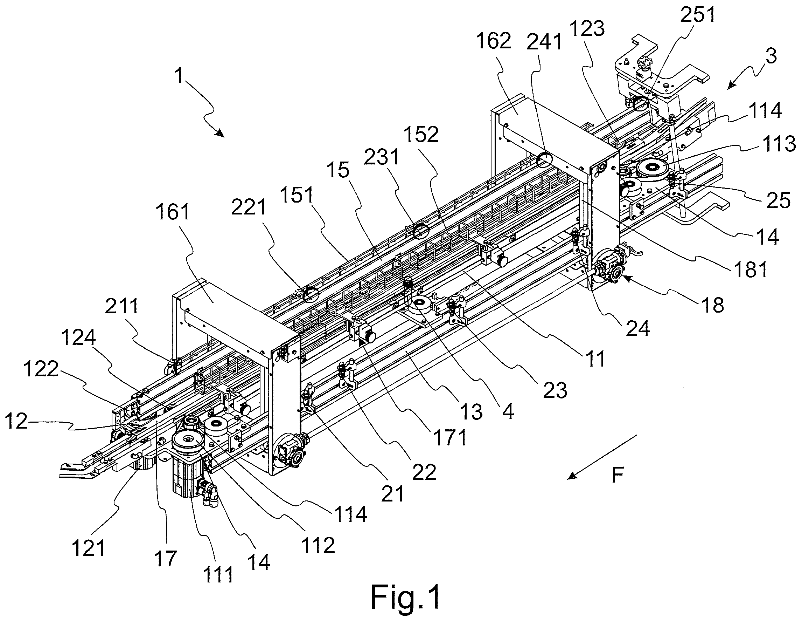

Figur 1 zeigt eine perspektivische Ansicht einer Ausführungsform einer Zulaufvorrichtung 1 umfassend zwei Rahmen 161 und 162 mit jeweils einer Breitenverstellvorrichtung 18. Die Breitenverstellvorrichtung 18 umfasst jeweils zwei Halterungsstangen 181, welche über eine Spindel aufeinander zu und voneinander weg bewegt werden können. An den Halterungsstangen 181 ist jeweils ein seitliches Befestigungsprofil 13 montiert. An den seitlichen Befestigungsprofilen 13 sind ein Minimum-Sensor 21, zwei Lückenerkennungssensoren 22, 23, 24 und ein Maximum-Sensor 25 montiert, welche als Lichtschranken mit entsprechenden Reflektoren 211, 221, 231, 241, 251 ausgebildet sind.

Über einen Übergabeabschnitt 3 gelangen Vorformlinge 4 z.B. von einem Rollensortierer in die Zulaufvorrichtung 1. Die Vorformlinge 4 liegen auf seitlichen Kantenflächen eines ersten Förderriemens 11 und eines zweiten Förderriemens 12 (teilweise verdeckt in Figur 1) über den Tragring auf und werden in einer zwischen einem ersten Riemenabschnitt des ersten Förderriemens 11 und einem zweiten Riemenabschnitt des zweiten Förderriemens 12 ausgebildeten Förderstrecke in Förderrichtung F gefördert.

An den seitlichen Befestigungsprofilen 13 sind Montageplatten 14 montiert, wobei auf einer Montageplatte 14 ein erster Antrieb 111 für den ersten Förderriemen 11 und ein zweiter Antrieb 121 für den zweiten Förderriemen 12 angeordnet sind, welche Rollen 112 bzw. 122 antreiben. Der erste Förderriemen 11 läuft über die Rollen 112 und 113 und der zweite Förderriemen 12 läuft über die Rollen 122 und 123. Weiter sind für beide Förderriemen 11 und 12 äussere Führungsrollen vorgesehen.

Die Förderriemen 11, 12 sind als Zahnriemen ausgebildet und laufen weiter über jeweils zwei Zahnräder 114 und 124 (das zweite Zahnrad für den zweiten Förderriemen 12 im Bereich der Rolle 123 ist in der Figur 1 verdeckt und nicht sichtbar). Die in der Figur 1 nach oben orientierten Seitenkanten der Zähne der Zahnriemen (nicht gezeigt in der Figur 1) bilden die Auflage für den Tragring des Vorformlings 4.

Im oberen Bereich der Zulaufvorrichtung ist ein oberes Befestigungsprofil 15 angeordnet, welches an den Rahmen 161, 162 befestigt ist. Seitlich des oberen Befestigungsprofils 15 sind Kabelkanäle 151, 152 befestigt. Am oberen Befestigungsprofil 15 sind weiter Höhenverstellelemente 171 befestigt, welche eine Höhenbegrenzung 17 oberhalb des Vorformlings 4 halten. Die Höhenbegrenzung 17 (wie auch andere Elemente der Zulaufvorrichtung 1, wie z.B. Teile der Förderriemen) ist zur besseren Sichtbarkeit des Vorformlings 4 teilweise transparent gezeigt.

Im Normalbetrieb ist die Förderstrecke der Zulaufvorrichtung 1 vorzugsweise über ihre gesamte Länge mit Vorformlingen 4 aufgefüllt. Wenn einer der Lückenerkennungssensoren 22, 23, 24 eine Lücke in seinem Detektionsbereich detektiert, werden z.B. die Antriebe 111 und 121 mit einer grösseren Geschwindigkeit angesteuert, um Vorformlinge nachzufördern und die Lücke zu schliessen. Wenn der Minimum-Sensor 21 keine Vorformlinge mehr in seinem Bereich detektiert, ist der minimale Füllstand unterschritten worden und es kann z.B. ein Alarm-Signal ausgelöst werden, damit mögliche Störungen in vorgeschalteten Einheiten beseitigt werden können. Gleichzeitig kann eine nachfolgende Vorrichtung, wie z.B. eine Blasmaschine oder ein Einlaufstern eines Klemmförderers oder ein Inspektionssystem gestoppt, d.h. die Produktion unterbrochen werden.

Die Förderstrecke der Zulaufvorrichtung 1 ist horizontal ausgerichtet, was eine Aufstellung in Bodennähe erlaubt. Es ist aber auch denkbar, dass die Förderstrecke ein Gefälle zwischen 1° und 20°, bevorzugt zwischen 5° und 10°, gegenüber der Horizontalen aufweist.

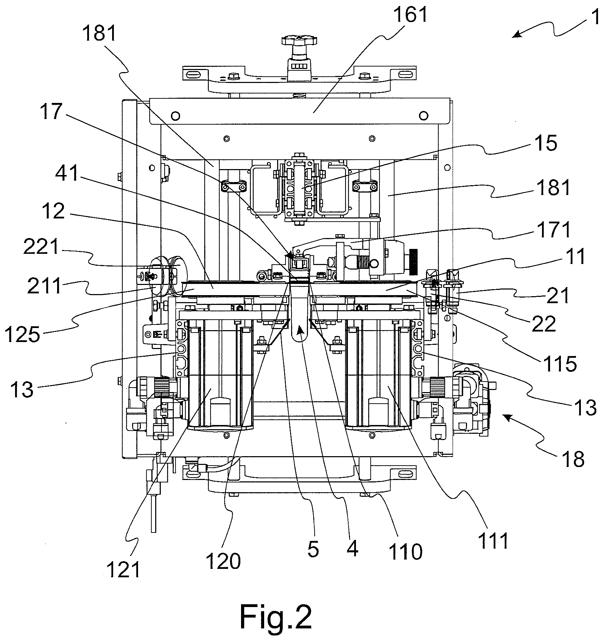

Figur 2 zeigt eine Frontalansicht der Zulaufvorrichtung 1 aus Figur 1. Wie in der Figur 2 zu erkennen ist, liegt der Vorformling 4 über den Tragring 41 auf den seitlichen Kantenflächen 110 und 120 der als Zahnriemen ausgebildeten Förderriemen 11 und 12 auf. Die Kantenflächen 110 und 120, welche durch die oberen Seitenkanten der Zähne der Zahnriemen ausgebildet werden, bilden daher eine Auflage für den Tragring 41 des Vorformlings 4 aus. Durch die Reibkraft zwischen den Kantenflächen 110 und 120 der Förderriemen 11 und 12 und dem Tragring 41 ist die Auflage mit dem Tragring 41 derart in Eingriff bringbar, dass eine Staukraft auf den sich in der Förderstrecke befindenden Vorformling in Förderrichtung aufgebracht wird.

Der Abstand der Förderriemen 11 und 12 ist dabei derart über die Breitenverstellvorrichtung 18 eingestellt, dass zwischen den Förderriemen 11 und 12 ausreichend Platz für den Vorformling 4 besteht. Zudem bilden die zu den seitlichen Kantenflächen 110 und 120 senkrechten Oberflächen 113 und 123 der ersten und zweiten Förderriemen 11 und 12 Stabilisierungsflächen für den Vorformling 4 aus, welche eine Querauslenkung des Vorformlings 4 begrenzen. Durch geeignete Einstellung des Abstands zwischen den Förderriemen 11 und 12 können die Oberflächen 115 und 125 zudem den länglichen Abschnitt des Vorformlings 4 unterhalb des Tragrings 41 (hier der konische Abschnitt) kontaktieren und die Förderung des Vorformlings 4 unterstützen.

Die Förderriemen 11 und 12 sind in der gezeigten Ausführungsform aus Polyurethan hergestellt. Die Zulaufvorrichtung 1 weist weiter zusätzliche Auslenkungsbegrenzungselemente 5 auf.

Die Förderriemen 11 und 12 werden, wie schon in Figur 1 gezeigt, durch Antriebe 111 und 121 angetrieben. Es ist wie bereits beschrieben auch möglich, die Förderriemen 11 und 12 durch einen gemeinsamen Antrieb mit einem geeigneten Wendegetriebe anzutreiben.

Die Höhenbegrenzung 17 ist über Höhenverstellelemente 171 in Form einer Hebelanordnung vertikal verstellbar. Die weiteren bereits zu Figur 1 beschriebenen Bestandteile der Zulaufvorrichtung sind mit entsprechenden Bezugszeichen bezeichnet.

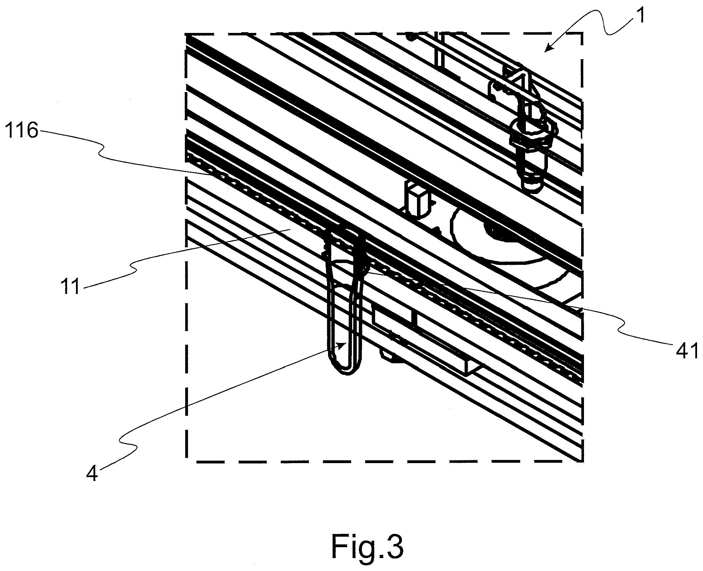

Figur 3 zeigt einen Ausschnitt einer perspektivischen Schnittansicht der Zulaufvorrichtung 1 aus Figur 1. In der Schnittansicht ist der halbe Vorformling 4 erkennbar, dessen Tragring 41 auf der einen Seite auf den oberen Seitenkanten der Zähne 116 des als Zahnriemen ausgebildeten Förderriemens 11 aufliegen.

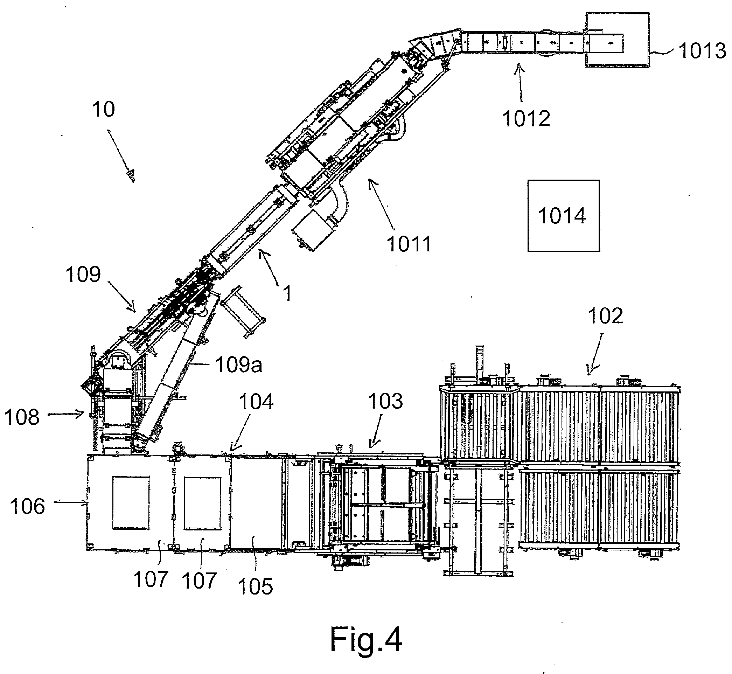

Figur 4 zeigt eine Draufsicht einer Ausführungsform einer Förderanlage 10 für Vorformlinge umfassend die Zulaufvorrichtung 1 aus Figur 1. Über das Transportrollenband 102 werden Kartons mit Vorformlingen zu der Kippvorrichtung 103 gebracht, welche jeweils einen Karton aufnimmt und den Inhalt, d.h. die Vorformlinge, auf eine Transportbandvorrichtung 104 ausschüttet. Die Transportbandvorrichtung 104 umfasst ein erstes Transportband 105, eine trichterartige Vorrichtung 106 sowie ein zweites (Quer-) Transportband, welches unterhalb der trichterartigen Vorrichtung 106 angeordnet ist. Das erste Transportband 105 und die trichterartige Vorrichtung 106 weisen jeweils eine Abdeckung 107 auf. Das zweite Transportband übergibt die Vorformlinge ungeordnet an einen Hochförderer 108. An den Hochförderer 108 schliesst sich ein Rollensortierer 109 mit einem Rückführband 109a an.

Stromabwärts des als Rollensortierer 109 ausgebildeten stromaufwärtigen Moduls ist die Zulaufvorrichtung 1 vorgesehen, welche die richtig ausgerichteten, d.h. geordneten, Vorformlinge vom Rollensortierer 109 übernimmt und zu einem als Einlaufstern eines Klemmförderers 1011 ausgebildeten stromabwärtigen Modul führt.

An den Klemmförderer 1011 schliesst sich eine Ablaufschiene 1012 an, über welche die vereinzelten Vorformlinge in die Streckblasmaschine 1013 gelangen. Die Zulaufvorrichtung 1 kann die Vorformlinge auch direkt zu einer Streckblasmaschine 1013 bzw. zu deren Einlaufstern führen. Ferner ist eine Steuerung 1014 gezeigt, welche mit den Minimum- bzw. Maximum-Sensoren und den Lückensensoren sowie den Antrieben der Förderriemen und ggf. dem Rollensortierer 109 zur Annahme von Detektionssignalen und zur Ansteuerung verbunden ist.

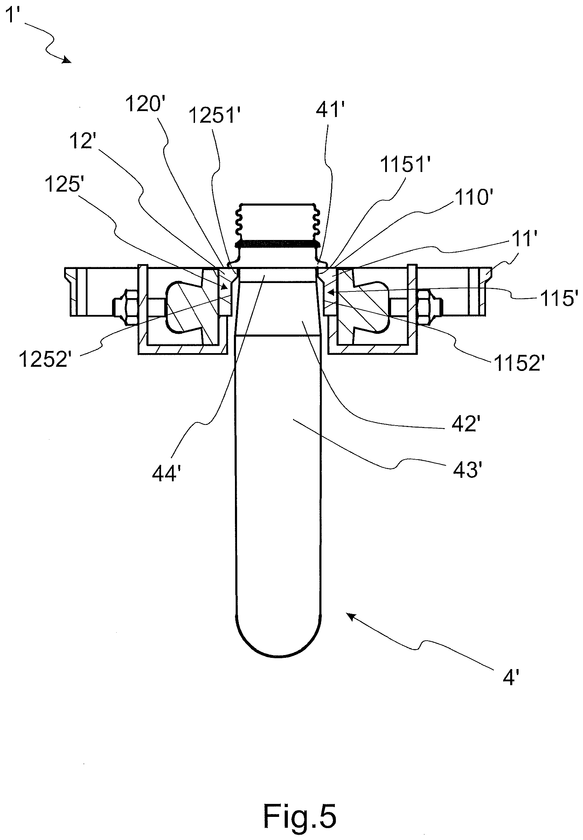

Figur 5 zeigt eine Schnittansicht eines Ausschnitts einer Ausführungsform einer Zulaufvorrichtung 1' mit einem ersten Förderriemen 11' und einem zweiten Förderriemen 12'. Der erste und der zweite Förderriemen 11', 12' weisen jeweils eine seitliche Kantenfläche 110', 120' auf, welche eine Auflage für einen Tragring 41' eines Vorformlings 4' ausbilden. Der erste und der zweite Förderriemen 11', 12' weisen jeweils eine Stabilisierungsfläche 115', 125' auf, welche einander gegenüberliegend der Stabilisierung eines unterhalb des Tragrings 41' anschliessenden Abschnitts 42' des Vorformlings 4' dienen. Die Stabilisierungsflächen 115', 125' weisen jeweils eine Abstufung auf, so dass die Stabilisierungsflächen 115', 125' jeweils eine erste Stabilisierungsteilfläche 1151', 1251' und eine zweite Stabilisierungsteilfläche 1152', 1252', welche unterhalb der ersten Stabilisierungsteilfläche 1151', 1251' angeordnet ist, umfassen. Die Abstufung ist als Hinterschneidung ausgebildet, so dass sich der Abstand zwischen den Förderriemen 11', 12' in der Förderstrecke in von der Auflage abgewandter Richtung, d.h. in der gezeigten Figur 5 nach unten, stufenartig vergrössert. Die Abstufung umfasst jeweils eine die erste Stabilisierungsteilfläche 1151', 1251' und die zweite Stabilisierungsteilfläche 1152', 1252' verbindende Schräge. Wie in der Figur 5 ersichtlich, kann durch die Abstufung der Stabilisierungsflächen 115', 125' eine Stabilisierung des Abschnitts 42', welcher unterhalb an den Tragring 41' angeordnet ist und eine konische Form aufweist, erreicht werden. Am sich konisch erweiternden Abschnitt 42' schliesst ein gerader zylindrischer Abschnitt 43' an. Es ist ersichtlich, dass die Abstufung der Stabilisierungsflächen 115', 125' z.B. auch für eine Stabilisierung eines Vorformlings mit einem nach Aussen gewölbten, unterhalb des Tragrings anschliessenden, Abschnitt vorteilhaft sein kann. Die ersten Stabilisierungsteilflächen 1151', 1251' sind zudem derart voneinander beabstandet, dass die ersten Stabilisierungsteilflächen 1151', 1251' mit einem vertikalen Abschnitt 44' des Vorformlings 4' in Eingriff kommen und das Fördern des Vorformlings 4' unterstützen können.

## Patentansprüche

1. Zulaufvorrichtung (1, 1') für eine Förderanlage (10) für Vorformlinge (4, 4'), welche ausgebildet ist, geordnet von einem stromaufwärtigen Modul (109) der Förderanlage (10) kommende Vorformlinge (4, 4') zu einem stromabwärtigen Modul (1011) der Förderanlage (10) zu fördern, wobei die Zulaufvorrichtung (1, 1') einen ersten und einen zweiten über jeweils mindestens zwei Rollen (112, 113, 114; 122, 123, 124) geführte Förderriemen (11, 11'; 12, 12') umfasst, wobei zwischen einem ersten Riemenabschnitt des ersten Förderriemens (11, 11') und einem zweiten Riemenabschnitt des zweiten Förderriemens (12, 12') eine Förderstrecke für die Vorformlinge (4, 4') ausgebildet wird, wobei der erste und der zweite Förderriemen (11, 11'; 12, 12') derart angeordnet sind, dass eine seitliche Kantenfläche (110, 110') des ersten Förderriemens (11, 11') und eine seitliche Kantenfläche (120, 120') des zweiten Förderriemens (12, 12') eine Auflage für einen Tragring (41, 31') eines Vorformlings (4, 4') ausbilden, wobei die Auflage derart mit der Unterseite des Tragrings (41, 41') in Eingriff bringbar ist, dass eine Staukraft auf den sich in der Förderstrecke befindenden Vorformling (4, 4') in Förderrichtung (F) aufgebracht wird, wobei am stromabwärtigen Abschnitt der Förderstrecke der Zulaufvorrichtung ein Minimum-Sensor (21, 211) zur Detektion von Vorformlingen und am stromaufwärtigen Abschnitt der Förderstrecke der Zulaufvorrichtung ein Maximum-Sensor (25, 251) zur Detektion von Vorformlingen angeordnet ist, wobei zwischen dem Minimum-Sensor (21, 211) und dem Maximum-Sensor (25, 251) mindestens ein Lückenerkennungssensor angeordnet ist, welcher eingerichtet ist, Lücken in der Förderstrecke zwischen Vorformlingen zu detektieren.

2. Zulaufvorrichtung (1, 1') nach Anspruch 1, **dadurch gekennzeichnet, dass** jeweils eine zur Kantenfläche (110, 110'; 120, 120') senkrecht orientierte Oberfläche (115, 115'; 125, 125') des ersten und zweiten Förderriemens (11, 11'; 12, 12') zwei gegenüberliegende Stabilisierungsflächen (115, 115'; 125, 125') für den unterhalb des Tragrings (41, 41') anschliessenden Abschnitt des Vorformlings (4, 4') ausbilden, welche derart mit dem unterhalb des Tragrings (41, 41') anschliessenden Abschnitt des Vorformlings (4, 4') in Eingriff bringbar sind, dass eine Auslenkung des sich in der Förderstrecke befindenden Vorformlings (4, 4') quer zur Förderrichtung (F) begrenzt wird und vorzugsweise das Fördern des Vorformlings (4, 4') unterstützt wird.

3. Zulaufvorrichtung (1) nach Anspruch 1 oder 2, **dadurch gekennzeichnet, dass** die Zulaufvorrichtung (1) für jeden Förderriemen (11; 12) einen Antrieb (111; 121) aufweist, oder dass die Zulaufvorrichtung einen gemeinsamen Antrieb für den ersten und den zweiten Förderriemen aufweist, welcher vorzugsweise eingerichtet ist, ein Drehmoment zwischen 10 Nm und 12 Nm zu erzeugen.

4. Zulaufvorrichtung (1) nach einem der vorangehenden Ansprüche, **dadurch gekennzeichnet, dass** die Förderriemen (11; 12) aus einem Kunststoff, vorzugsweise einem Polyurethan oder einem Polyester oder einem Polyamid, hergestellt sind.

5. Zulaufvorrichtung (1) nach einem der vorangehenden Ansprüche, **dadurch gekennzeichnet, dass** die Förderriemen als Zahnriemen (11; 12) ausgebildet sind, wobei die Auflage für einen Tragring (41) eines Vorformlings (4) mindestens teilweise durch Seitenkanten der Zähne (116) der Zahnriemen (11;12) ausgebildet wird.

6. Zulaufvorrichtung (1) nach einem der vorangehenden Ansprüche, **dadurch gekennzeichnet, dass** die als Auflage für einen Tragring (41) eines Vorformlings (4) ausgebildeten Kantenflächen (110; 120) der Förderriemen (11; 12) derart ausgebildet sind, dass bei Überschreiten einer Grenzstaukraft auf einen sich in der Förderstrecke befindenden Vorformlings (4) ein Gleitschlupf zwischen den Kantenflächen (110; 120) und dem Tragring (41) des Vorformlings auftritt.

7. Zulaufvorrichtung (1) nach einem der Ansprüche 2 bis 6, **dadurch gekennzeichnet, dass** die Stabilisierungsflächen (115; 125) der Förderriemen (11; 12) vertikal ausgerichtet sind, oder dass die Stabilisierungsflächen der Förderriemen eine Neigung zwischen 5° und 10° gegenüber der Vertikalen aufweisen.

8. Zulaufvorrichtung (1') nach einem der vorangehenden Ansprüche, **dadurch gekennzeichnet, dass** die Förderriemen (11', 12') jeweils eine Stabilisierungsfläche (115', 125') aufweisen, welche derart ausgebildet sind, dass sich der Abstand zwischen den Förderriemen (11', 12') in der Förderstrecke vorzugsweise in von der Auflage abgewandter Richtung vergrössert, wobei die Stabilisierungsflächen (115', 125') vorzugsweise jeweils eine Abstufung aufweisen, welche die Stabilisierungsflächen (115', 125') jeweils in eine erste Stabilisierungsteilfläche (1151', 1251') und eine zweite Stabilisierungsteilfläche (1152', 1252') unterteilt.

9. Zulaufvorrichtung (1) nach einem der vorangehenden Ansprüche, **dadurch gekennzeichnet, dass** die Förderriemen (11; 12) derart angeordnet sind, dass die Förderstrecke horizontal ist.

10. Zulaufvorrichtung (1, 1') nach einem der vorangehenden Ansprüche, **dadurch gekennzeichnet, dass** die Förderriemen (11, 11'; 12, 12') eine Breite zwischen 10 und 50 mm aufweisen.

11. Zulaufvorrichtung (1) nach einem der vorangehenden Ansprüche, **dadurch gekennzeichnet, dass** zwischen dem Minimum-Sensor (21, 211) und dem Maximum-Sensor (25, 251) mindestens zwei, bevorzugt vier oder mehr, Lückenerkennungssensoren (22, 221; 23, 231; 24, 241) angeordnet sind, welche eingerichtet ist sind, Lücken in der Förderstrecke zwischen Vorformlingen zu detektieren, wobei die Lückenerkennungssensoren (22, 221; 23, 231; 24, 241) vorzugsweise mit einer Steuerung (1014) verbunden sind, welche bei Detektion von einer oder mehreren Lücken den mindestens einen Antrieb (111; 121) derart steuert, dass die Umlaufgeschwindigkeit der Förderriemen (11; 12) erhöht wird.

12. Zulaufvorrichtung (1) nach einem der Ansprüche 1 bis 10, **dadurch gekennzeichnet, dass** der Lückenerkennungssensor (22, 221; 23, 231; 24, 241) mit einer Steuerung (1014) verbunden ist, welche bei Detektion von einer oder mehreren Lücken den mindestens einen Antrieb (111; 121) derart steuert, dass die Umlaufgeschwindigkeit der Förderriemen (11; 12) erhöht wird.

13. Förderanlage (10) für Vorformlinge umfassend eine Zulaufvorrichtung (1) nach einem der vorangehenden Ansprüche und eine Mehrzahl von Vorformlingen (4), welche mit veränderlichem Abstand zueinander in der Förderstrecke der Zulaufvorrichtung (1) gefördert werden, wobei auf die Vorformlinge (4) in einem stromabwärtigen Abschnitt der Förderstrecke der Zulaufvorrichtung (1) eine Staukraft aufbringbar ist, wobei die Zulaufvorrichtung (1) vorzugsweise stromabwärts eines Aufreihsortierers (109), vorzugsweise eines Rollensortierers (109) oder Zentrifugalsortierer, und stromaufwärts einer Abnahmevorrichtung (1011), vorzugsweise Einlaufstern oder Einlaufrollen, angeordnet ist.

14. Förderanlage (10) nach Anspruch 13, **dadurch gekennzeichnet, dass** die Förderanlage (10) eine Steuerung (1014) umfasst, welche mit Lückenerkennungssensoren (22, 221; 23, 231; 24, 241) der Zulaufvorrichtung (1) verbunden ist, und eingerichtet ist, bei Detektion von einer oder mehreren Lücken den mindestens einen Antrieb (111; 121) derart zu steuern, dass die Umlaufgeschwindigkeit der Förderriemen (11; 12) erhöht wird.

15. Förderanlage (10) nach Anspruch 13 oder 14, **dadurch gekennzeichnet, dass** die Förderriemen (11, 11'; 12, 12') eine Breite aufweisen, so dass die Stabilisierungsflächen (115, 115'; 125, 125') mindestens ein Zwanzigstel, bevorzugt mindestens ein Zehntel, besonders bevorzugt mindestens ein Fünftel, weiter besonders bevorzugt mindestens ein Viertel, der Höhe des sich in der Förderstrecke befindenden Vorformlings (4, 4') abdecken.

## Claims

1. Feed device (1, 1') for a conveyor system (10) for preforms (4, 4'), which is designed to convey preforms (4, 4') coming from an upstream module (109) of the conveyor system (10) to a downstream module (1011) of the conveyor system (10), wherein the feed device (1, 1') comprises a first and a second conveyor belt (11, 11'; 12, 12') each guided over at least two rollers (112, 113, 114; 122, 123, 124) respectively, wherein a conveying path for the preforms (4, 4') is formed between a first belt section of the first conveyor belt (11, 11') and a second belt section of the second conveyor belt (12, 12'), wherein the first and second conveyor belts (11, 11'; 12, 12') are arranged in such a way that a lateral edge surface (110, 110') of the first conveyor belt (11, 11') and a lateral edge surface (120, 120') of the second conveyor belt (12, 12') form a support for a support ring (41, 31') of a preform (4, 4'), wherein the support can be engaged with the underside of the support ring (41, 41') in such a way that an accumulation force is applied to the preform (4, 4') located in the conveying path (4, 4') in the conveyor direction (F), wherein a minimum sensor (21, 211) for detecting preforms is arranged at the downstream section of the conveying path of the feed device and a maximum sensor (25, 251) for detecting preforms is arranged at the upstream section of the conveying path of the feed device, wherein at least one gap detection sensor is arranged between the minimum sensor (21, 211) and the maximum sensor (25, 251), which is designed to detect gaps in the conveying path between preforms.

2. Feed device (1, 1') according to claim 1, **characterised in that** surfaces (115, 115'; 125, 125') of each of the first and second conveyor belts (11, 11'; 12, 12') arranged perpendicular to the edge surfaces (110, 110'; 120, 120') form two opposing stabilising surfaces (115, 115'; 125, 125') for the section of the preform (4, 4') adjoining the support ring (41, 41') underneath, which can be brought into engagement with the section of the preform (4, 4') adjoining the support ring (41, 41') underneath in such a way that deflection of the preform (4, 4') located in the conveying path transversely to the conveyor direction (F) is limited and, preferably, the conveying of the preform (4, 4') is supported.

3. Feed device (1) according to claim 1 or 2, **characterised in that** the feed device (1) has a drive (111; 121) for each conveyor belt (11; 12), or that the feed device has a common drive for the first and second conveyor belts, which is preferably designed to generate a torque between 10 Nm and 12 Nm.

4. Feed device (1) according to one of the preceding claims, **characterised in that** the conveyor belts (11; 12) are made of a plastic, preferably a polyurethane or a polyester or a polyamide.

5. Feed device (1) according to one of the preceding claims, **characterised in that** the conveyor belts are designed as toothed belts (11; 12), wherein the support for a support ring (41) of a preform (4) is formed at least partially by side edges of teeth (116) of the toothed belts (11; 12).

6. Feed device (1) according to one of the preceding claims, **characterised in that** the edge surfaces (110; 120) of the conveyor belts (11; 12) are designed in such a way that, when a threshold accumulation force is exceeded on a preform (4) located in the conveying path, a sliding slip occurs between the edge surfaces (110; 120) and the support ring (41) of the preform.

7. Feed device (1) according to one of claims 2 to 6, **characterised in that** the stabilising surfaces (115; 125) of the conveyor belts (11; 12) are vertically aligned, or **in that** the stabilising surfaces of the conveyor belts have an inclination of between 5° and 10° relative to the vertical.

8. Feed device (1') according to one of the preceding claims, **characterised in that** the conveyor belts (11', 12') each have a stabilising surface (115', 125') which is designed in such a way that the distance between the conveyor belts (11', 12') in the conveying path increases, preferably in the direction away from the support , wherein the stabilising surfaces (115', 125') preferably each have a step which divides the stabilising surfaces (115', 125') into a first stabilising partial surface (1151', 1251') and a second stabilising partial surface (1152', 1252').

9. Feed device (1) according to one of the preceding claims, **characterised in that** the conveyor belts (11; 12) are arranged in such a way that the conveying path is horizontal.

10. Feed device (1, 1') according to one of the preceding claims, **characterised in that** the conveyor belts (11, 11'; 12, 12') have a width between 10 and 50 mm.

11. Feed device (1) according to one of the preceding claims, **characterised in that** at least two, preferably four or more, gap detection sensors (22, 221; 23, 231; 24, 241) are arranged between the minimum sensor (21, 211) and the maximum sensor (25, 251), which are designed to detect gaps in the conveying path between preforms, wherein the gap detection sensors (22, 221; 23, 231; 24, 241) are preferably connected to a control system (1014) which, upon detection of one or more gaps, controls the at least one drive (111; 121) in such a way that the circulation speed of the conveyor belts (11; 12) is increased.

12. Feed device (1) according to one of claims 1 to 10, **characterised in that** the gap detection sensor (22, 221; 23, 231; 24, 241) is connected to a control system (1014) which, upon detection of one or more gaps, controls the at least one drive (111; 121) in such a way that the rotational speed of the conveyor belts (11; 12) is increased.

13. Conveyor system (10) for preforms, comprising a feed device (1) according to one of the preceding claims and a plurality of preforms (4) which are conveyed at variable distances from one another in the conveying path of the feed device (1), wherein an accumulation force can be applied to the preforms (4) in a downstream section of the conveying path of the feed device (1), wherein the feed device (1) is preferably arranged downstream of a lining up sorter (109), preferably a roller sorter (109) or centrifugal sorter, and upstream of a takeover device (1011), preferably an inlet star or inlet rollers.

14. Conveyor system (10) according to claim 13, **characterised in that** the conveyor system (10) comprises a control system (1014) which is connected to gap detection sensors (22, 221; 23, 231; 24, 241) of the feed device (1) and is designed to control the at least one drive (111; 121) in such a way that the circulation speed of the conveyor belts (11; 12) is increased when one or more gaps are detected.

15. Conveyor system (10) according to claim 13 or 14, **characterised in that** the conveyor belts (11, 11'; 12, 12') have a width such that the stabilising surfaces (115, 115'; 125, 125') cover at least one twentieth, preferably at least one tenth, particularly preferably at least one fifth, and further particularly preferably at least one quarter, of the height of the preform (4, 4') located in the conveying path.

## Revendications

1. Dispositif d'alimentation (1, 1') pour un système de convoyage (10) destiné à des préformes (4, 4'), qui est conçu pour transporter des préformes (4, 4') provenant d'un module en amont (109) du système de convoyage (10) vers un module en aval (1011) du système de convoyage (10), dans lequel le dispositif d'alimentation (1, 1') comprend une première et une deuxième bande transporteuse (11, 11' ; 12, 12') guidées chacune sur au moins deux rouleaux (112, 113, 114 ; 122, 123, 124), dans lequel un chemin de transport pour les préformes (4, 4') est formé entre une première section de bande de la première bande transporteuse (11, 11') et une deuxième section de bande de la deuxième bande transporteuse (12, 12'), dans lequel les première et deuxième bandes transporteuses (11, 11'; 12, 12') sont disposées de telle manière qu'une surface de bord latérale (110, 110') de la première bande transporteuse (11, 11') et une surface de bord latérale (120, 120') de la deuxième bande transporteuse (12, 12') forment un support pour une bague de support (41, 31') d'une préforme (4, 4'), dans lequel le support peut être engagé avec la face inférieure de la bague de support (41, 41') de telle sorte qu'une force d'accumulation soit appliquée à la préforme (4, 4') située dans le chemin de transport dans la direction de transport (F), dans lequel un capteur minimum (21, 211) pour détecter les préformes est disposé à la section aval du chemin de transport du dispositif d'alimentation et un capteur maximum (25, 251) pour détecter les préformes est disposé dans la section amont du chemin de transport du dispositif d'alimentation, au moins un capteur de détection d'espace étant disposé entre le capteur de minimum (21, 211) et le capteur de maximum (25, 251), lequel capteur de détection d'espace est conçu pour détecter des espaces dans le chemin de transport entre les préformes.

2. Dispositif d'alimentation (1, 1') selon la revendication 1, **caractérisé en ce que** les surfaces (115, 115' ; 125, 125') de chacune des première et deuxième bandes transporteuses (11, 11' ; 12, 12') disposées perpendiculairement aux surfaces de bord (110, 110' ; 120, 120') forment deux surfaces de stabilisation opposées (115, 115' ; 125, 125') pour la partie de la préforme (4, 4') adjacente à la bague de support (41, 41') situé en dessous, qui peuvent être mises en prise avec la partie de la préforme (4, 4') adjacente à la bague de support (41, 41') situé en dessous, de telle sorte que la déviation de la préforme (4, 4') située dans le chemin de transport transversalement à la direction de transport (F) soit limitée et, de préférence, que le transport de la préforme (4, 4') soit soutenu.

3. Dispositif d'alimentation (1) selon la revendication 1 ou 2, **caractérisé en ce que** le dispositif d'alimentation (1) comporte un entraînement (111 ; 121) pour chaque bande transporteuse (11 ; 12), ou **en ce que** le dispositif d'alimentation comporte un entraînement commun pour les première et deuxième bandes transporteuses, qui est de préférence conçu pour générer un torque entre 10 Nm et 12 Nm.

4. Dispositif d'alimentation (1) selon l'une des revendications précédentes, **caractérisé en ce que** les bandes transporteuses (11 ; 12) sont fabriquées du plastique, de préférence polyuréthane, polyester ou polyamide.

5. Dispositif d'alimentation (1) selon l'une des revendications précédentes, **caractérisé en ce que** les bandes transporteuses sont conçues comme des courroies dentées (11 ; 12), dans lesquelles le support pour une bague de support (41) d'une préforme (4) est formé au moins partiellement de manière par les bords latéraux des dents (116) des courroies dentées (11 ; 12).

6. Dispositif d'alimentation (1) selon l'une des revendications précédentes, **caractérisé en ce que** les surfaces de bord (110 ; 120) des bandes transporteuses (11 ; 12) sont conçues de telle manière que, lorsqu'une force d'accumulation seuil est dépassée sur une préforme (4) située dans le chemin de transport, un glissement se produit entre les surfaces de bord (110 ; 120) et la bague de support (41) de la préforme.

7. Dispositif d'alimentation (1) selon l'une des revendications 2 à 6, **caractérisé en ce que** les surfaces de stabilisation (115 ; 125) des bandes transporteuses (11 ; 12) sont alignées verticalement, ou **en ce que** les surfaces de stabilisation des bandes transporteuses ont une inclinaison comprise entre 5° et 10° par rapport à la verticale.

8. Dispositif d'alimentation (1') selon l'une des revendications précédentes, **caractérisé en ce que** les bandes transporteuses (11', 12') comportent chacune une surface de stabilisation (115', 125') qui est conçue de telle manière que la distance entre les bandes transporteuses (11', 12') dans le chemin de transport augmente, de préférence dans la direction s'éloignant du support , les surfaces de stabilisation (115', 125') comportent de préférence chacune un gradin qui divise les surfaces de stabilisation (115', 125') en une première surface de stabilisation partielle (1151', 1251') et une deuxième surface de stabilisation partielle (1152', 1252').

9. Dispositif d'alimentation (1) selon l'une des revendications précédentes, **caractérisé en ce que** les bandes transporteuses (11 ; 12) sont disposées de telle manière que le chemin de transport soit horizontal.

10. Dispositif d'alimentation (1, 1') selon l'une des revendications précédentes, **caractérisé en ce que** les bandes transporteuses (11, 11' ; 12, 12') ont une largeur comprise entre 10 et 50 mm.

11. Dispositif d'alimentation (1) selon l'une des revendications précédentes, **caractérisé en ce qu'**au moins deux, de préférence quatre ou plus, capteurs de détection d'espace (22, 221 ; 23, 231 ; 24, 241) sont disposés entre le capteur minimum (21, 211) et le capteur maximum (25, 251), qui sont conçus pour détecter des espaces dans le chemin de transport entre les préformes, les capteurs de détection d'espace (22, 221 ; 23, 231 ; 24, 241) sont de préférence connectés à un système de commande (1014) qui, lors de la détection d'un ou plusieurs espaces, commande au moins un entraînement (111 ; 121) de telle manière que la vitesse de circulation des bandes transporteuses (11 ; 12) soit augmentée.

12. Dispositif d'alimentation (1) selon l'une des revendications 1 à 10, **caractérisé en ce que** le capteur de détection d'espace (22, 221 ; 23, 231 ; 24, 241) est connecté à un système de commande (1014) qui, lors de la détection d'un ou plusieurs espaces, commande le ou les entraînements (111 ; 121) de telle sorte que la vitesse de rotation des bandes transporteuses (11 ; 12) soit augmentée.

13. Système de convoyage (10) pour préformes, comprenant un dispositif d'alimentation (1) selon l'une des revendications précédentes et une pluralité de préformes (4) qui sont transportées à des distances variables les unes des autres dans le chemin de transport du dispositif d'alimentation (1), dans lequel une force d'accumulation peut être appliquée aux préformes (4) dans une section en aval du chemin de transport du dispositif d'alimentation (1), dans lequel le dispositif d'alimentation (1) est de préférence disposé en aval d'un trieur d'alignement (109), de préférence un trieur à rouleaux (109) ou un trieur centrifuge, et en amont d'un dispositif de transfert (1011), de préférence une étoile d'entrée ou des rouleaux d'entrée.

14. Système de convoyage (10) selon la revendication 13, **caractérisé en ce que** le système de convoyage (10) comprend un système de commande (1014) qui est connecté à des capteurs de détection d'espace (22, 221 ; 23, 231 ; 24, 241) du dispositif d'alimentation (1) et est conçu pour commander le ou les entraînements (111 ; 121) de telle manière que la vitesse de circulation des bandes transporteuses (11 ; 12) soit augmentée lorsqu'un ou plusieurs espaces sont détectés.

15. Système de convoyage (10) selon la revendication 13 ou 14, **caractérisé en ce que** les bandes transporteuses (11, 11' ; 12, 12') ont une largeur telle que les surfaces de stabilisation (115, 115' ; 125, 125') couvrent au moins un vingtième, de préférence au moins un dixième, de préférence encore au moins un cinquième, et de préférence encore au moins un quart de la hauteur de la préforme (4, 4') située dans le chemin de transport.
